# FASCICULE DE BREVET EUROPEEN

(11) **EP 0 594 510 B1**
(45) Date de publication et mention de la délivrance du brevet: **12.03.1997**
(21) Numéro de dépôt: 93402603.0
(22) Date de dépôt: 22.10.1993
(51) Int. Cl.: B60H 1/00, F04D 29/60

(54) **Dispositif pour la fixation d'un groupe moto-ventilateur, en particulier sur une paroi de véhicule automobile**
Vorrichtung zur Befestigung eines Motorgebläses, insbesondere an der Wand eines Kraftfahrzeugs
Device for fastening a motor ventilator unit, in particular to the wall of a motor vehicle

(30) Priorité: 22.10.1992 ES 9202105
(43) Date de publication de la demande: 27.04.1994
(73) Titulaire: VALEO CLIMATIZACION S.A., 08100 Martorellas, Barcelona (ES)
(72) Inventeur: Padres Cortes, Joaquin, E-08011 Barcelona (ES)
(74) Mandataire: Gamonal, Didier

(56) Documents cités:
- EP-A- 0 080 171
- CH-A- 532 726
- US-A- 1 983 979
- US-A- 3 977 814

## Description

La présente invention concerne un groupe pulseur.

Un groupe pulseur fait habituellement partie intégrante du montage d'un équipement de chauffage/ventilation d'air conditionné pour véhicules automobiles, ce groupe pulseur étant fixé notamment sur un tablier de véhicules automobiles.

Les principaux éléments gui forment un équipement de chauffage/ventilation ou d'air conditionné pour véhicules automobiles sont le distributeur, le groupe de froid/chaud et le groupe pulseur.

Le groupe pulseur permet le captage de l'air de d'habitacle du véhicule pour le diriger vers le groupe de froid/chaud de l'équipement de chauffage/ventilation ou d'air conditionné. Ce groupe pulseur doit rester parfaitement accouplé avec le groupe de froid/chaud, la liaison étant améliorée par des joints d'étanchéité.

Le montage et l'installation d'un groupe pulseur d'un équipement de chauffage/ventilation ou d'air conditionné sur le tablier d'un véhicule automobile est effectué au moyen de deux points d'ancrage fixes. La fixation du groupe se fait moyennant un seul déplacement, soit en sens vertical soit en sens horizontal, le déplacement étant limité à la position des deux points d'ancrage du tablier. Cette limitation rend difficile le positionnement du groupe pulseur avec le groupe de froid/chaud.

Un des inconvénients, qui se présente fréquemment pendant le montage du groupe pulseur, est déterminé principalement par le manque de place sur le tablier des véhicules automobiles, ce qui rend difficile la fixation du groupe pulseur sur le tablier, son centrage et son positionnement et par conséquent rend difficile la manoeuvre d'accouplement entre les différents éléments de l'équipement de chauffage/ventilation ou d'air conditionné. Ces difficultés se manifestant, dans beaucoup de cas, par des défauts d'étanchéité dans la liaison, ce qui provoquent des fuites d'air non traité vers l'intérieur de l'habitacle.

L'objet de la présente invention est de résoudre l'inconvénient mentionné au moyen d'un groupe pulseur, qui rend facile son positionnement et son accouplement.

Selon la présente invention, un groupe pulseur comprenant une bouche d'entrée d'air, un conduit d'air, une bouche de sortie d'air et des moyens de fixation notamment sur un tablier de véhicules automobiles, ce groupe pulseur étant destiné à être connecté à une bouche d'entrée d'air d'un groupe froid/chaud d'un équipement de chauffage/ventilation ou d'air conditionné, caractérisé en ce que les moyens de fixation du groupe pulseur sont des rainures qui permettent le mouvement du groupe pulseur au moins en deux directions sensiblement perpendiculaires, de telle sorte que soit facilité le positionnement de la bouche d'entrée d'air du groupe de froid/chaud relativement la bouche de sortie d'air du groupe pulseur.

Ces rainures facilitent le positionnement de la bouche d'entée d'air du groupe de froid/chaud et la bouche de sortie d'air du groupe pulseur, ce qui améliore les conditions d'étanchéité de la fermeture.

Avantageusement, ces rainures présentent une forme de L et définissent deux directions de déplacement perpendiculaires du groupe pulseur.

Cette fermeture est complétée avec un joint d'étanchéité qui peut être fixé, soir le périmètre de la paroi de la bouche de sortie d'air du groupe pulseur, soit sur le périmètre de la paroi de la bouche d'entrée d'air du groupe de froid/chaud.

Selon une réalisation préférée, les rainures des moyens de fixation sont ouvertes au moins par une de ses extrémités.

Cette ouverture permet de réaliser aisément la manoeuvre d'extraction du groupe pulseur, sans avoir besoin de démonter tout l'ensemble.

Pour mieux comprendre l'invention, des dessins sont annexés, dans lesquels, seulement à titre d'exemple, un cas pratique de réalisation de l'invention est représenté.

La figure 1 montre une vue en coupe d'un groupe pulseur connecté à une bouche d'entrée d'un groupe de froid/chaud, avec un dispositif conventionnel de fixation.

La figure 2 est une vue en plan du groupe pulseur avec le dispositif conventionnel de fixation représenté sur la figure 1.

La figure 3 est une vue en coupe d'un groupe pulseur avec le dispositif de fixation objet de l'invention.

La figure 4 est une vue en plan du groupe pulseur avec le dispositif mentionné objet de l'invention, représenté sur la figure 3.

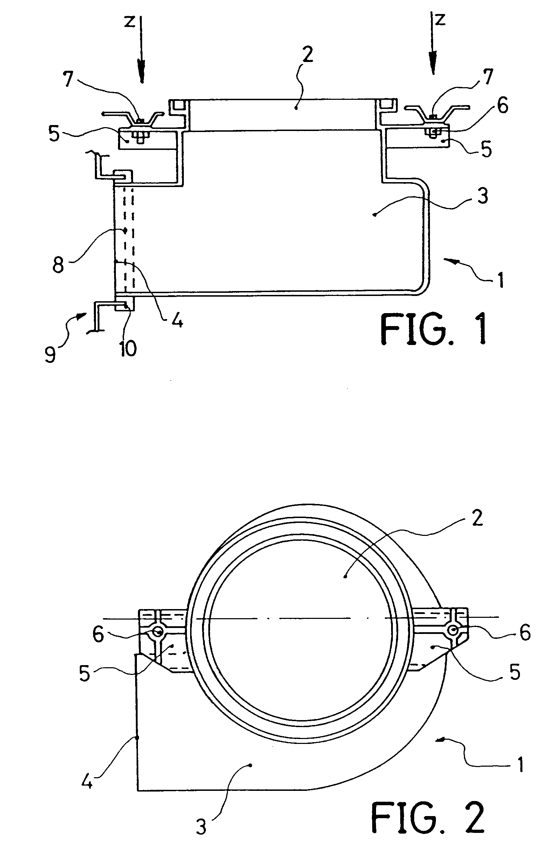

Tel qu'on peut observer sur les figures 1 et 2, un groupe pulseur 1 comprend une bouche d'entrée d'air 2, un conduit d'air 3, une bouche de sortie d'air 4, et deux oreilles de support 5, avec un trou de fixation 6 dans chacune des oreilles. Pendant le montage du groupe pulseur 1, au moyen d'éléments de fixation 7, tel qu'une vis par exemple sur le tablier d'un véhicule automobile, la bouche de sortie d'air 4 du groupe pulseur est accouplé à une bouche d'entrée 8 d'un groupe de froid/chaud 9. Cet accouplement est amélioré grâce à un joint d'étanchéité.

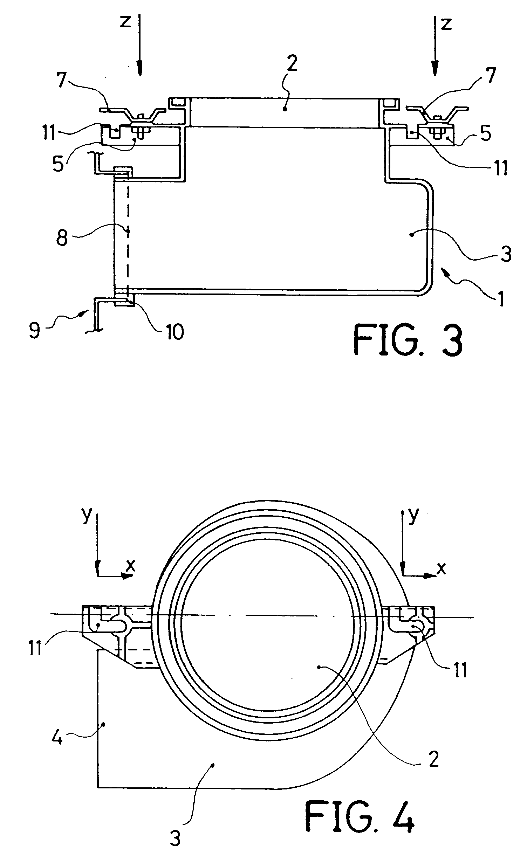

Sur les figures 3 et 4, on peut observer un groupe pulseur 1, dans lequel les trous de fixation 6 ont été remplacés par des rainures 11 en forme de L, selon une réalisation préférée de l'objet de l'invention.

Tels qu'on déduit des figures 1 et 2 pour le montage du groupe pulseur 1, ce groupe se déplace lui-même dans une seule direction, dans le sens de l'axe Z jusqu'au contact avec les éléments de fixation 7. La bouche d'entrée 8 du groupe de froid/chaud 9 et la bouche de sortie 4 du groupe pulseur sont accouplées et, au moyen du joint 10, on obtient l'étanchéité de l'accouplement.

Selon la réalisation de l'invention (figures 3 et 4) le montage du groupe pulseur s'effectue initialement au moyen d'un déplacement, dans le sens de l'axe Z, jusqu'au contact avec les éléments de fixation 7. Les rainures 11, permettent de réaliser des déplacements dans le sens des axes X et Y. Le déplacement dans le sens de l'axe Y permet le centrage du groupe pulseur 1 avec les éléments de fixation 7, et le déplacement dans le sens de l'axe X permet le rapprochement entre la bouche de sortie 4 du groupe pulseur et la bouche d'entrée 8 du groupe de froid/chaud.

Au moyen de ces déplacements on arrive à améliorer l'accouplement entre les éléments mentionnés et le joint 10 d'étanchéité, grâce à un positionnement correcte entre la bouche de sortie 4 et la bouche d'entrée 8.

De cette façon, on obtient un dispositif pour la fixation du groupe pulseur d'un équipement de chauffage/ventilation ou d'air conditionné pour véhicules automobiles avec des conditions améliorées d'accouplement et étanchéité de ce dispositif.

Dans ce mémoire on a décrit une réalisation particulière de l'invention à titre d'exemple, quoique le dispositif pour la fixation du groupe pulseur décrit est susceptible de nombreuses modifications et variantes accessibles à l'homme du métier.

## Revendications

1. Groupe pulseur (1) comprenant une bouche d'entrée d'air (2), un conduit d'air (3), une bouche de sortie d'air (4) et des moyens de fixation notamment sur un tablier de véhicules automobiles, ce groupe pulseur étant destiné à être connecté à une bouche d'entrée d'air (8) d'un groupe froid/chaud (9) d'un équipement de chauffage/ventilation ou d'air conditionné, caractérisé en ce que les moyens de fixation du groupe pulseur (1) sont des rainures (11) qui permettent le mouvement du groupe pulseur (1) au moins en deux directions sensiblement perpendiculaires, de telle sorte que soit facilité le positionnement de la bouche d'entrée d'air (8) du groupe de froid/chaud (9) relativement la bouche de sortie d'air (4) du groupe pulseur (1).

2. Groupe pulseur, selon la revendication 1, caractérisé en ce que les rainures (11) des moyens de fixation présentent une forme de L et permettent le déplacement en deux directions sensiblement perpendiculaires.

3. Groupe pulseur, selon les revendications précédentes, caractérisé en ce que les rainures (11) des moyens de fixation sont ouvertes au moins par une de ses extrémités, ce qui permet aisément l'extraction du groupe pulseur (1).

## Claims

1. Extraction unit (1) comprising an air inlet orifice (2), an air conduit (3), an air outlet orifice (4) and means of fixing notably to a motor vehicle dashboard, this extraction unit being designed to be connected to an air inlet orifice (8) of the cooling/heating unit (9) of a heating/ventilation or conditioned-air appliance, characterised in that the means of fixing the extraction unit (1) are grooves (11) which allow the movement of the extraction unit (1) at least in two substantially perpendicular directions, so that the positioning of the air inlet orifice (8) of the cooling/heating unit (9) relative to the air outlet orifice (4) of the extraction unit (1) is facilitated.

2. Extraction unit according to Claim 1, characterised in that the grooves (11) of the fixing means have an L shape and allow movement in two substantially perpendicular directions.

3. Extraction unit according to the preceding claims, characterised in that the grooves (11) of the fixing means are open at least at one of its ends, which easily allows the removal of the extraction unit (1).

## Patentansprüche

1. Gebläsesatz (1), umfassend eine Lufteinlaßöffnung (2), einen Luftkanal (3), eine Luftauslaßöffnung (4) und Befestigungsmittel, insbesondere zur Befestigung an der Stirnwand von Kraftfahrzeugen, wobei dieser Gebläsesatz für den Anschluß an eine Lufteinlaßöffnung (8) einer Kälte-/ Wärmegruppe (9) einer Heizungs-, Lüftungs- oder Klimaanlage bestimmt ist, **dadurch gekennzeichnet,** daß die Befestigungsmittel für den Gebläsesatz (1) aus Nuten (11) bestehen, die eine Bewegung des Gebläsesatzes (1) zumindest in zwei in etwa senkrechten Richtungen ermöglichen, so daß die Positionierung der Lufteinlaßöffnung (8) der Kälte-/Wärmegruppe (9) im Verhältnis zur Luftauslaßöffnung (4) des Gebläsesatzes (1) vereinfacht wird.

2. Gebläsesatz nach Anspruch 1 , **dadurch gekennzeichnet,** daß die Nuten (11) der Befestigungsmittel eine L-Form aufweisen und die Verschiebung in zwei in etwa senkrechten Richtungen ermöglichen.

3. Gebläsesatz nach den vorangehenden Ansprüchen, **dadurch gekennzeichnet,** daß die Nuten (11) der Befestigungsmittel zumindest an einem ihrer Enden offen sind, wodurch ein einfaches Herausziehen des Gebläsesatzes (1) ermöglicht wird.
